# FASCICULE DE BREVET EUROPEEN

(11) **EP 3 871 001 B1**
(45) Date de publication et mention de la délivrance du brevet: **28.09.2022**
(21) Numéro de dépôt: 19801677.6
(22) Date de dépôt: 21.10.2019
(51) Int. Cl.: G01S 7/524, G01S 7/527, G01S 15/42, G01S 7/521, G01S 15/58

(54) **PROCEDE D'UTILISATION D'UN SONAR ACTIF A LARGE BANDE SPECTRALE D'EMISSION ET SYSTEME SONAR**
VERFAHREN ZUR VERWENDUNG EINES AKTIVEN SONARS MIT EINEM BREITEN SPEKTRALEN EMISSIONSBAND UND SONARSYSTEM
METHOD FOR USING AN ACTIVE SONAR WITH A WIDE SPECTRAL EMISSION BAND AND SONAR SYSTEM

(30) Priorité: 22.10.2018 FR 1801115
(43) Date de publication de la demande: 01.09.2021
(73) Titulaire: THALES, 92400 Courbevoie (FR)
(72) Inventeur: GOUDEAU, Jean-Philippe, 06560 VALBONNE (FR); MELLANO, Philippe, 06560 VALBONNE (FR)
(74) Mandataire: Atout PI Laplace
(86) Numéro de dépôt international: PCT/EP2019/078579
(87) Numéro de publication internationale: WO 2020/083838

(56) Documents cités:
- FR-A1- 2 499 252
- FR-A1- 2 570 916
- GB-A- 2 516 976

## Description

L'invention relève du domaine de la détection par sonar.

L'augmentation de la portée d'un sonar actif se fait actuellement grâce à l'utilisation de basses fréquences d'émission pour lutter contre l'absorption et par l'amélioration du traitement de la réception des échos réfléchis par les objets. L'augmentation de la portée implique cependant deux inconvénients majeurs :
- La couverture sonar est de plus en plus morcelée. En effet, du fait des phénomènes de propagation, de convergence et les éventuelles réflexions sur la surface et le fond des ondes acoustiques dans l'eau, la surveillance sur une longue portée devient optimale sur une zone d'étendue restreinte. L'augmentation de la portée s'accompagne de l'augmentation de zones « aveugles » entre le sonar et la région de convergence des ondes acoustiques de plus en plus grande.
- La période entre deux émissions acoustiques et donc entre deux retours d'échos, appelée récurrence, s'allonge proportionnellement en fonction de la portée souhaitée. Il est donc possible qu'un objet traverse la zone de détection optimale entre deux impulsions et donc sans être détecté. De plus, du fait de la durée des émissions sonar cela implique qu'il est impossible de maintenir une détection de position continue (appelée aussi poursuite) d'un objet proche du sonar actif tout en gardant une couverture lointaine. Le cadencement des impulsions acoustiques devient donc problématique du fait de l'incapacité de couvrir toutes les zones de détection avec un seul type d'émission.

Malgré l'utilisation de plus en plus fréquente des sonars basses fréquences, en particulier les sonars remorqués par des bâtiments de surface ou embarqués sur des sous-marins, il n'existe pas de solution claire ou faisant l'unanimité pour pallier cette déficience. La solution la plus utilisée consiste à embarquer des capteurs plus appropriés à la surveillance ou la détection courte distance (bouées, sonar de coque...) qui nécessitent donc l'utilisation d'autres porteurs ou de senseurs supplémentaires sur la plateforme et ainsi une charge, un encombrement et un coût plus élevés.

L'eau de mer n'étant pas un milieu homogène, la propagation des ondes sonores est influencée par les reliefs mais aussi par la température de l'eau, la pression et même dans une moindre mesure la salinité de l'eau. Dans l'eau, les ondes sonores ne se propagent pas en ligne droite mais gauchissent en fonction des variations de température, de pression ou de salinité. Elles peuvent être réfléchies par le fond et par la surface ou par une limite démarquant l'eau chaude de l'eau froide située généralement entre 30 et 100 mètres de profondeur appelée thermocline. Au-delà de la thermocline, la température devient pratiquement constante, et les ondes se courbent naturellement vers la surface sous l'influence de la pression. C'est pourquoi certains sonars longue portée sont systématiquement remorqués et immergés en dessous de la thermocline, bénéficiant ainsi de conditions favorables de propagation. C'est le cas des sonars VDS (pour Variable Depth Sonar en anglais, c'est-à-dire sonars à immersion variable).

Ainsi, à une certaine distance du sonar, qui dépend de la fréquence d'émission de l'onde sonore et des conditions de propagation, les différents trajets de propagation interfèrent de manière constructive et forment une région annulaire (zone de convergence ou ZC) autour du sonar où la probabilité de détection des cibles est maximale. Cette zone de convergence définit une sorte de barrière au-delà et en deçà de laquelle la probabilité de détection d'une cible est très faible. L'étendue de ces zones de faible probabilité de détection est de plus en plus importante quand la portée de surveillance augmente.

Afin d'effectuer de la surveillance et/ou de la poursuite longue portée, il est nécessaire d'utiliser des sonars pouvant émettre des impulsions acoustiques basses fréquences. En effet, la perte de niveau sonore en décibel d'une onde acoustique est de l'ordre de 20.log(*R*) + *a(f). R ;* où R est la distance de propagation, a est le coefficient d'absorption de l'onde sonore qui croit en fonction de la fréquence de l'onde sonore (proportionnellement au carré de la fréquence par simplification). On comprend alors que pour minimiser le coefficient d'absorption et ainsi pouvoir effectuer de la surveillance longue portée il faut émettre des ondes sonores basses fréquences (typiquement inférieures à 2 kHz). De plus, pour travailler à longue portée, il est nécessaire de générer des impulsions acoustiques puissantes. Pour des contraintes énergétiques et d'échauffement thermique de l'émetteur, la cadence de répétition des impulsions est faible lorsque la durée des impulsions est longue. De plus, une faible cadence de répétition permet d'éviter les problèmes d'ambiguïtés de distance lors de la détection d'échos : si *Pmax* est la portée maximale de recherche souhaitée du balayage du sonar actif, alors la cadence de répétition non ambiguë ne doit pas être plus rapide que *2Pmax*/*c,* où c est la vitesse de propagation de l'onde acoustique dans l'eau (1500 m/s). Ainsi pour *Pmax* = 100km, la cadence de répétition ne doit pas dépasser 133 sec. Typiquement, le rapport cyclique est inférieur à 10% et la durée d'impulsions est de plusieurs secondes.

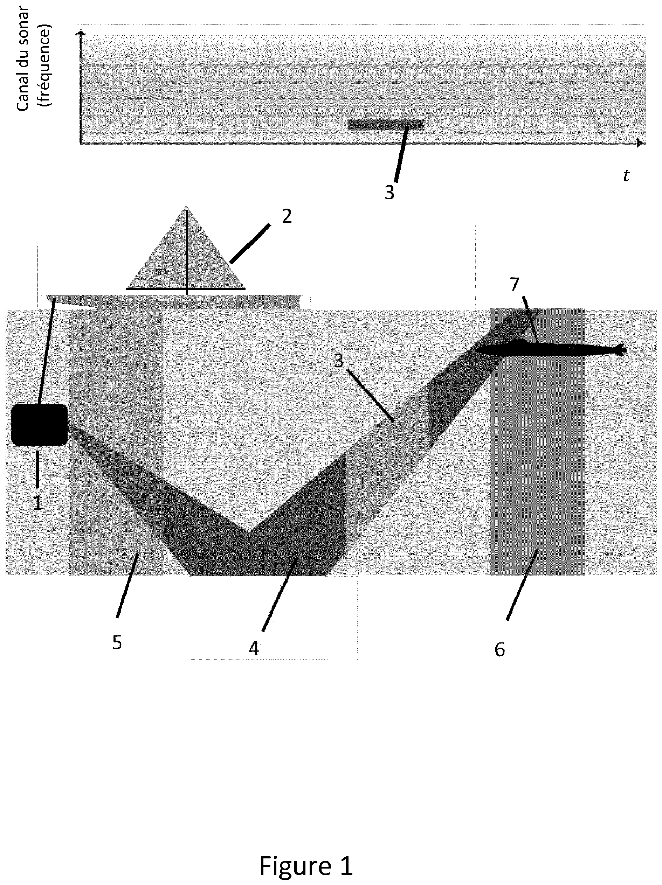

La figure 1 illustre le fonctionnement d'un sonar actif longue portée remorqué et immergé 1 comprenant une antenne pouvant émettre des impulsions basses fréquences connu de l'art antérieur. Dans le mode de réalisation de la figure 1, ce sonar est de type VDS et il est remorqué par câble rattaché à un navire 2. L'antenne du sonar permet d'émettre des impulsions acoustiques basses fréquences (inférieures à 2 kHz) avec une puissance supérieure à 220 dB, une cadence inférieure à 1 impulsion / 120 sec et de durée supérieure à 12 sec. Dans la figure 1, l'ensemble des trajets des impulsions acoustiques est schématisé par l'enveloppe 4. Ces trajets représentent la propagation des ondes sonores dans l'eau. La zone de convergence 6 (ZC) des ondes sonores est la zone où la probabilité de détection d'un objet est maximale. Dans le mode de réalisation de la figure 1, et selon la localisation du porteur la ZC est située entre 30 et 70 km. Une impulsion acoustique unique 3 est représentée spatialement dans l'enveloppe 4. Cette impulsion est aussi représentée dans le graphique 100 de la fréquence des impulsions émises en fonction du temps par l'antenne du sonar. Ce mode de fonctionnement permet une détection d'objet ou de cible à une longue distance. Le système d'antenne acoustique est composé d'une source d'émission et d'une antenne de réception. Par simplification on le représente par une antenne réceptrice/émettrice. Elle permet une acquisition des ondes sonores réfléchies par la cible 7, puis la détermination de divers paramètres de la cible à partir des échos. Les paramètres à déterminer sont choisis parmi la position (distance et azimut de la cible), la vitesse, la direction du déplacement, la surface effective de la cible détectée. La position est déduite du délai entre l'émission et la réception d'une impulsion sonore réfléchie par l'objet. La surface effective est déduite du niveau sonore des échos et de la distance de détection. Dans la figure 1, la cible détectée 7 est un sous-marin situé dans la zone de convergence 6.

Cependant, la cadence de répétition des impulsions acoustiques émises par l'antenne du sonar actif étant faible, le mode de réalisation de la figure 1 possède un certain nombre de désavantages:
- Une antenne ne peut pas émettre et recevoir simultanément sur la même fréquence, sous peine de créer des ambiguïtés distance. Il existe donc une zone « aveugle » proche du sonar où il est impossible de réaliser de la détection/surveillance. Cette zone aveugle correspond à la distance de propagation d'une impulsion acoustique émise par le sonar. Or, comme précisé précédemment, dans les sonars actifs longue portée la durée des impulsions acoustiques est longue. Ce type de sonar possède donc une zone aveugle plus large que les sonars de plus courte portée. Dans la figure 1, cette zone aveugle est représentée par la zone 5.
- En cas de détection d'une cible à mi-distance de l'échelle de portée du sonar, il devient nécessaire de modifier la cadence des émissions sonar pour optimiser la confirmation et la poursuite de l'objet détecté (avec une récurrence longue, adaptée à une surveillance lointaine, l'objet détecté ne sera « vu » que trop rarement et aura le temps de disparaitre des écrans sonars avant d'avoir pu engager les traitements de poursuite). Ce faisant, il est alors impossible de maintenir la surveillance longue distance et on laisse donc l'opportunité à une menace proche de la zone de convergence de la traverser sans être détectée, la portée effective du sonar ayant été réduite par le changement de cadence.
- Comme expliqué précédemment, la couverture sonar est de plus en plus éparse : les phénomènes de propagation favorisent certaines zones au détriment d'autres.

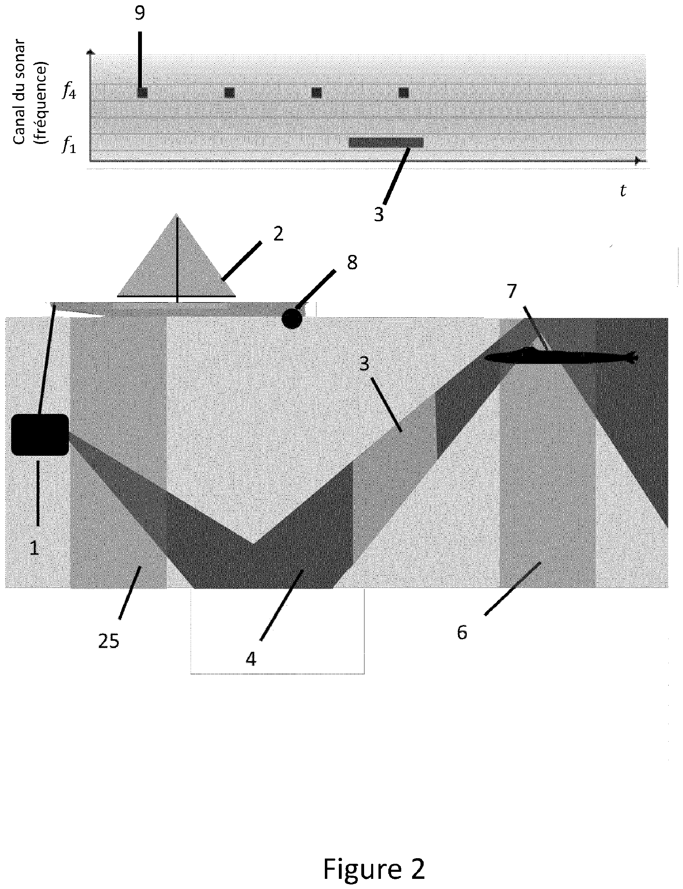

La figure 2 présente un mode de réalisation d'un système sonar 1 connu de l'art antérieur similaire au mode de réalisation de la figure 1 mais qui comprend en plus un sonar de coque 8 embarqué sur le navire 2. Ce sonar de coque permet de réaliser une détection courte portée complémentaire au sonar de longue portée 1 et ainsi d'éviter l'existence d'une zone « aveugle » proche du navire 2. L'ajout d'un sonar de coque permet donc une détection d'objets éventuellement présents dans la zone 25 simultanément à une surveillance longue portée. La représentation de la fréquence sur le graphique 200 des impulsions émises en fonction du temps par l'ensemble formé par le sonar actif longue portée 1 et le sonar de coque 8 permet d'illustrer le fait que les impulsions acoustiques 9 émises par le sonar de coque peuvent être très courte (de l'ordre de la seconde) à une cadence plus élevée (toutes les 20 secondes par exemple) avec une fréquence centrale supérieure à celles du sonar longue portée. Le fait d'avoir des impulsions courtes et de fréquence centrale élevée permet d'avoir une résolution et une performance de détection plus importante.

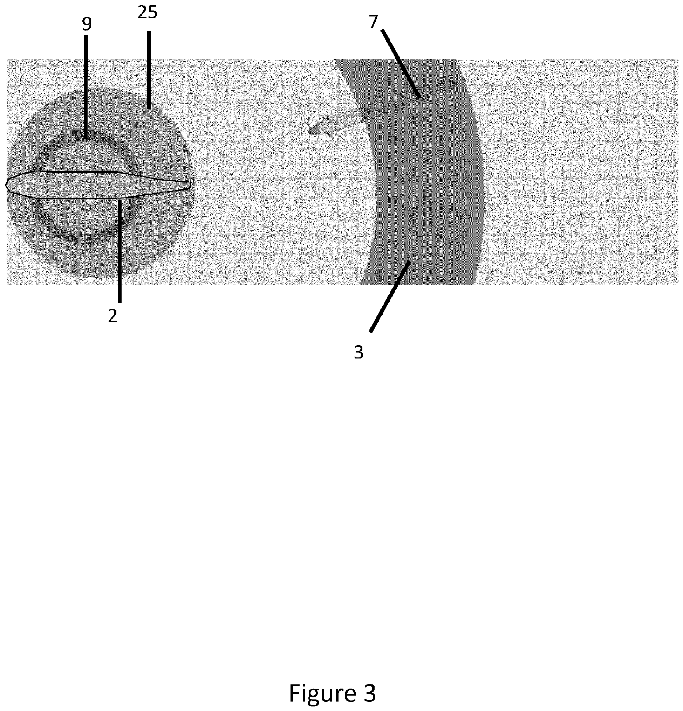

La figure 3 présente une vue du haut du mode de réalisation du système de détection sonar de la figure 2. Le navire 2 comprend un sonar actif longue portée 1 et un sonar de coque 8 qui ne sont pas représentés dans la figure 3. La vue du haut permet d'observer les impulsions sonores 9 émises par le sonar de coque permettant une surveillance dans la zone 25 proche du navire et les impulsions sonores 3 émises par le sonar longue distance permettant la détection de la cible 7. Les modes de réalisation des figures 2 et 3 permettent de résoudre le problème de la zone « aveugle » proche du sonar mais ne permettent toujours pas de d'effectuer plusieurs types de détections/surveillances simultanément (par exemple poursuite et surveillance longue portée) et de résoudre le problème de la couverture sonar morcelée. Par ailleurs le document GB2516976A divulgue un sonar actif présentant une bande passante continue ayant une largueur spectrale d'émission d'au moins deux octaves.

L'invention vise à résoudre les problèmes précités de l'art antérieur. Conformément à l'invention, ce but est atteint en fractionnant la bande passante en une pluralité de canaux dédiés, de manière simultanée et indépendante, à des modalités d'opérations distinctes (surveillance longue portée, surveillance courte portée, poursuite, etc.). Les canaux ne sont pas prédéfinis de manière rigide - comme dans l'exemple des figures 2 et 3, où les VDS et le sonar de coque opèrent chacun dans une bande prédéterminée ; au contraire, le découpage de la bande d'émission se fait de manière dynamique, à la demande de l'utilisateur, ce qui permet d'adapter un sonar selon l'invention à plusieurs sortes de missions (escorte, surveillance côtière...). Il s'agit là d'un changement de paradigme par rapport à l'approche courante, consistant à utiliser toute la bande de l'antenne pour améliorer la résolution spatiale de la détection. La mise en œuvre de l'invention nécessite une antenne présentant une bande ayant une largeur d'au moins deux octaves, et de préférence d'au moins trois octaves, ce qui n'est pas le cas des antennes conventionnelles.

### RESUME

Ainsi, un objet de l'invention est un procédé d'utilisation d'un sonar actif comprenant une antenne acoustique présentant une bande passante continue ayant une largeur spectrale d'émission d'au moins deux octaves et un système électronique de génération de signaux de pilotage de ladite antenne acoustique, le procédé étant caractérisé en ce qu'il comprend :
- la sélection dynamique d'une pluralité de modalités de fonctionnement ou d'opération sonar distinctes choisies parmi l'escorte, la surveillance, la poursuite, la dissuasion ou la communication, utilisant chacune une fraction différente de la bande passante d'émission de l'antenne acoustique, appelée canal; et
- l'utilisation du système électronique pour générer une pluralité de signaux de pilotage de ladite antenne acoustique correspondant aux modalités de fonctionnement sélectionnées, ledit système électronique étant adapté pour permettre au sonar de fonctionner selon une pluralité de modalités d'opération indépendantes et simultanées.

Selon des modes de réalisation particuliers d'un tel procédé :
- chaque modalité de fonctionnement sonar est définie par un ensemble de paramètres d'émission acoustique comprenant au moins :
   - une durée d'impulsion ;
   - une cadence d'impulsions ;
   - une fréquence centrale d'impulsion ;
   - un type d'impulsion ; et
   - un niveau sonore.
- il comprend en outre les étapes suivantes :
   - acquisition par l'antenne acoustique des échos provenant des différents canaux réfléchis par un ou des objets
   - détermination des paramètres du ou des objets à partir des différents échos.
- les paramètres à déterminer sont choisis parmi la vitesse, la position, la direction du déplacement et/ou la surface effective du ou des objets.
- la bande passante d'émission de l'antenne acoustique est fractionnée en au moins trois canaux couvrant une bande passante supérieure à deux octaves de manière à réaliser une surveillance longue distance avec le canal de plus basse fréquence centrale, une surveillance courte distance avec le canal de plus haute fréquence centrale et une poursuite avec le canal de fréquence centrale intermédiaire.
- la bande passante d'émission de l'antenne acoustique est fractionnée en un quatrième canal supplémentaire, d'une fréquence centrale comprise entre la fréquence centrale du canal adapté à la surveillance courte portée et celle du canal adapté à la surveillance longue portée, ledit canal possédant une cadence de répétition des impulsions plus de deux fois plus importante que celle du canal de surveillance courte portée de manière à fonctionner en mode dissuasion.
- la bande passante d'émission de l'antenne acoustique est fractionnée en un cinquième canal supplémentaire, ledit canal pouvant être utilisé librement y compris en mode continu, avec ou sans répétition, ce canal étant destiné à la communication acoustique.
- la cadence de répétition des impulsions acoustiques du canal adapté à la surveillance longue portée est au moins deux fois plus petite que celle du canal adapté à la surveillance courte portée.
- la durée des impulsions acoustiques du canal adapté à la surveillance longue portée est au moins deux fois plus grande que celle du canal adapté à la surveillance courte portée.
- la fréquence centrale des impulsions acoustiques du canal adapté à la surveillance longue portée est au moins deux fois plus petite que celle du canal adapté à la surveillance courte portée.
- la largeur spectrale de chaque canal est supérieure à 0.5 kHz et à 4 kHz pour les fréquences modulées.

Un autre objet de l'invention est un système sonar actif pour la mise en œuvre d'un procédé d'utilisation d'un sonar actif, comprenant une antenne acoustique et un système électronique de génération de signaux de pilotage de ladite antenne acoustique présentant une bande passante continue ayant une largeur spectrale d'émission d'au moins deux octaves et le système sonar actif étant caractérisé en ce que le système électronique de génération de signaux de pilotage de ladite antenne acoustique est configuré de manière à générer une pluralité de signaux de pilotage de ladite antenne acoustique correspondant à des modalités de fonctionnement sonar distinctes, choisies dynamiquement utilisant chacune une fraction différente de la bande passante d'émission de l'antenne acoustique, appelée canal, ledit système électronique étant adapté pour permettre au sonar de fonctionner selon une pluralité de modalités d'opération indépendantes et simultanées.

Selon des modes de réalisation particuliers d'un tel système : ladite antenne acoustique est centrée d'autour d'un premier axe longitudinal et comprend au moins un premier et un second ensemble d'au moins deux transducteurs empilés selon ledit axe longitudinal, chaque transducteur présentant au moins un mode radial ayant une fréquence de résonance, dite fréquence radiale, ainsi qu'un mode de cavité ayant une fréquence de résonance, dite fréquence de cavité, caractérisée en ce que les deux transducteurs du premier ensemble sont configurés pour émettre des ondes sonores dans une première bande de fréquence continue s'étendant au moins entre les fréquences de cavité et les fréquences radiales des transducteurs du premier ensemble et les deux transducteurs du second ensemble sont configurés pour émettre des ondes sonores dans une seconde bande de fréquence continue s'étendant au moins entre les fréquences de cavité et les fréquences radiales des transducteurs du second ensemble, en ce que la fréquence radiale d'un transducteur du premier ensemble est sensiblement égale à la fréquence de cavité d'un transducteur du second ensemble et en ce que les transducteurs du second ensemble sont placés entre les transducteurs du premier ensemble.

### BREVE DESCRIPTION DES DESSINS

D'autres caractéristiques, détails et avantages de l'invention ressortiront à la lecture de la description faite en référence aux dessins annexés donnés à titre d'exemple et qui représentent, respectivement :
- La figure 1, un porteur comprenant un sonar de l'art antérieur de type longue portée de surveillance.
- La figure 2, un porteur comprenant un sonar de l'art antérieur de type longue portée de surveillance en combinaison avec un sonar de coque pour une surveillance courte distance.
- La figure 3, une vue du haut du porteur similaire à celui de la figure 2.
- La figure 4, un sonar selon un mode de réalisation de l'invention.
- Les figures 5A et 5B, une antenne acoustique large bande permettant la mise en œuvre de l'invention.

Les références aux figures, quand elles sont identiques, correspondent aux mêmes éléments.

Dans les figures, sauf contre-indication, les éléments ne sont pas à l'échelle.

### DESCRIPTION DETAILLEE DE L'INVENTION

Par « surveillance alertée » ou « poursuite », on entend la surveillance continue des paramètres d'un objet dont on a préalablement repéré la position. Par « surveillance non alertée » ou « surveillance », on entend une recherche active sur une certaine zone d'un objet qui n'a pas été préalablement repéré. Par « dissuasion », on entend l'émission d'une impulsion active visant à dissuader l'objet de poursuivre ses actions ou ses déplacements dans une certaine direction.

Dans la suite, mode d'opération et mode de fonctionnement sont utilisés de manière interchangeable.

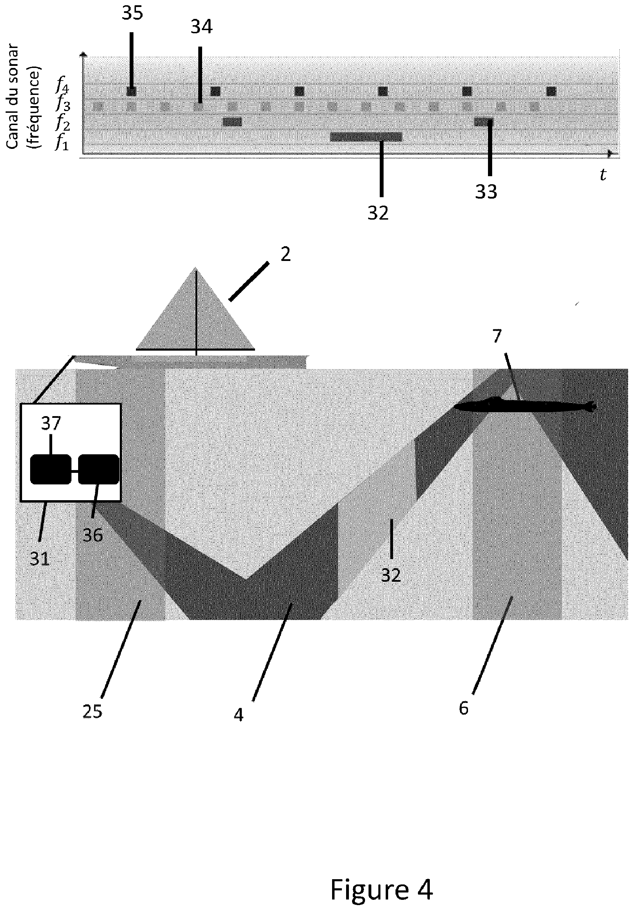

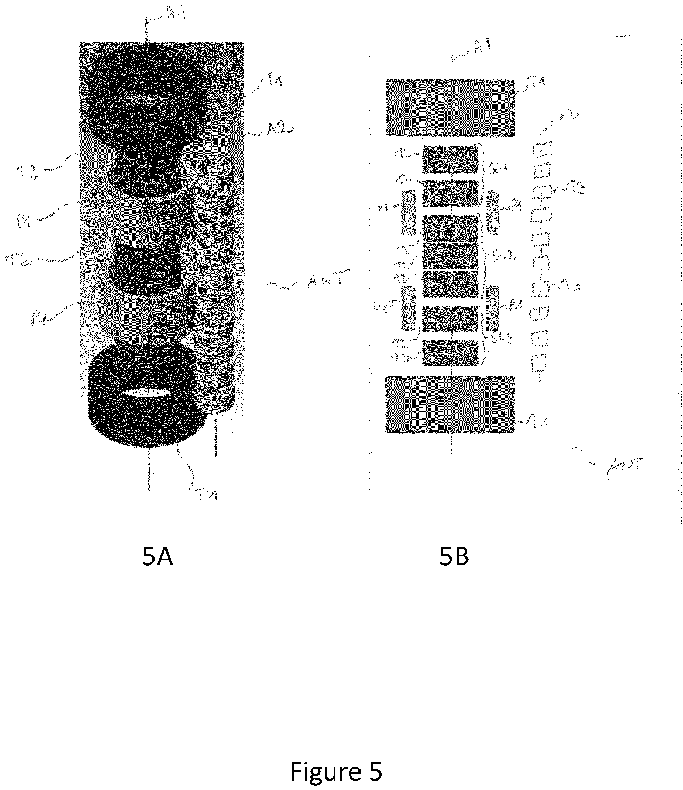

La figure 4 illustre un mode de réalisation de l'invention dans lequel un système sonar actif 31 comprend une antenne acoustique 37 et un système électronique de génération de signaux de pilotage de ladite antenne acoustique 36. Dans le mode de réalisation de la figure 4, l'antenne, immergée et remorquée par un navire 2, possède une bande passante ayant une largeur spectrale d'émission d'au moins deux octaves. La structure de l'antenne est illustrée par les figures 5A et 5B et sera décrite en détail plus loin. Dans un autre mode de réalisation, le transducteur est composé d'au moins trois tailles de transducteurs différents de type FFR. Cet arrangement permet d'obtenir une grande largeur de bande continue tout en conservant un bon niveau sonore d'émission (>> 220 dB) dans la totalité de la bande. A l'aide d'une telle antenne, il est alors possible de fractionner la bande passante d'émission de l'antenne en plusieurs canaux indépendants correspondant chacun à un mode de fonctionnement sonar distinct. Les modes de fonctionnements correspondant aux différents canaux sont définis par un ensemble de paramètres d'émission d'impulsions acoustiques choisis parmi la fréquence centrale d'impulsion, la cadence d'impulsion, le niveau sonore, le type d'impulsion (FM, CW, BPSK, PTFM¹, ...) et la durée d'impulsion. Le choix du nombre de canaux et les
¹ FM = Frequency Modulation (Fréquence Modulée)
CW = Continuous Wave (Fréquence Pure, Sinusoide) différents paramètres d'émission acoustique de chaque canal correspondant à chaque mode de fonctionnement sonar est réalisé de manière dynamique en temps réel par le système électronique de génération de signaux de pilotage de ladite antenne acoustique. Ainsi, selon les besoins de l'utilisateur, le système sonar actif 31 peut réaliser simultanément plusieurs tâches de surveillance indépendantes (détection longue distance, courte distance, poursuite, dissuasion, communication...) et ces modes de fonctionnement peuvent être modifiés et adaptés en temps réel par l'utilisateur par le biais du système électronique de génération de signaux de pilotage de l'antenne acoustique. Cette flexibilité et ce dynamisme sont rendus possibles par le fractionnement en canaux de la bande d'émission continue de l'antenne qui possède une largeur spectrale d'émission supérieure à deux octaves. On considère ici qu'une bande d'émission d'une antenne est continue si elle n'est pas décomposée en sous-bandes disjointes avec une baisse de gain supérieure à -10 dB (de préférence - 5 dB, voir -3dB) entre sous-bandes. De manière plus précise, une bande d'émission est considérée comme continue si les écarts de niveau sonore entre les maximums locaux et les minimums locaux de cette bande sont strictement inférieurs à 10dB (de préférence 5 dB, voir 3dB).

Dans le mode de réalisation de la figure 4, la bande passante est divisée en quatre canaux (32, 33, 34, 35) comme le montre la représentation de la fréquence des impulsions émises en fonction du temps 300.

Le premier canal longue portée 32 de fréquence centrale *f*₁ ∈ [1 *kHz* ; *2 kHz],* de largeur spectrale de l'ordre de plusieurs centaines de Hz jusqu'à 1 ou 2 kHz permet de générer des impulsions de durée pouvant atteindre plus de 16 sec et de niveau sonore largement supérieur à 220 dB avec une cadence d'impulsion adaptée aux portées de l'ordre typiquement de une ou deux ZC (80 km à 160 km). De par la basse fréquence centrale des impulsions générées, ce canal permet de réaliser de la détection ou surveillance longue portée. Dans le mode de réalisation de la figure 4, la détection longue portée avec le premier canal 32 est optimale dans la zone de convergence 6.
BPSK = Binary Phase Shift Keying (code FM résolvant en doppler)
PTFM = trains d'impulsions modulées linéairement en fréquence (Pulse
Train Frequency Modulation, PTFM)

La bande passante de l'antenne est fractionnée en un deuxième canal poursuite 33 de fréquence centrale *f*₂ > *f*₁ qui permet de réaliser une poursuite d'une cible. Ce canal possède une fréquence centrale *f*₂ ∈ [2 *kHz* ; *3 kHz*] et une largeur spectrale de l'ordre de plusieurs centaine de Hz jusqu'à 1 ou 2 kHz, un niveau sonore similaire une durée d'impulsion de quelques secondes et une cadence d'impulsion adaptée (légèrement supérieure) à la distance de la cible à pister par rapport au porteur. La cadence des impulsions émises dans ce canal est plus élevée afin de maintenir le contact avec une cible lorsque celle-ci est détectée dans une zone à l'intérieur de la zone de convergence 6. La fréquence centrale *f*₂ est plus élevée que *f*₁ pour éviter les problèmes d'interférence entre les deux canaux.

Le troisième canal (« dissuasion ») 34 de fréquence centrale *f₃* > *f*₂ et de largeur spectrale déterminée en fonction du code d'émission (morse, bruit pénible pour l'équipage de la menace....) permet au sonar de fonctionner en mode dissuasion. Les impulsions sonores de ce canal sont courtes (de l'ordre de la seconde) de très haute cadence (de l'ordre de quelques secondes) et de haut niveau sonore suffisant pour être perçu par l'équipage de la menace. Le but de ce mode de fonctionnement étant, par exemple, de dissuader une cible de continuer le déplacement dans une certaine direction. Ce mode n'étant pas destiné à la détection, la cadence d'émission peut être rapide, sans s'inquiéter des ambigüités distance. Au contraire, une cadence rapide peut faire penser à la cible que la distance de l'émetteur est proche. La seule contrainte sera liée au temps de repos nécessaire de l'émetteur et de l'antenne d'émission entre deux émissions.

Enfin, le quatrième canal courte portée 35 de fréquence centrale *f*₄ > *f₃* avec *f₃* ∈ [5 *kHz ;* 8 *kHz*] et une largeur spectrale de l'ordre de plusieurs centaines de Hz jusqu'à 1 ou 2 KHz voire 4 kHz. Les impulsions émises dans ce canal sont de durée de la seconde au max, de niveau sonore supérieur à 220 dB et de cadence de répétition de l'ordre de 20 secondes, adaptée à la taille de la zone aveugle générée par les impulsions à *f*₁. Ce canal permet une détection courte portée dans la zone 25 proche du navire à l'instar de celle qui était réalisée par le sonar de coque dans le mode de réalisation de la figure 2. Ici, les impulsions sont plus courtes et la fréquence centrale des impulsions est plus élevée afin d'avoir une détection précise de la cible. Le niveau d'émission peut être plus faible, la zone de recherche d'intérêt (zone interrogée) étant de plus courte portée.

Dans un autre mode de réalisation, la cadence de répétition des impulsions du canal dissuasion 34 est au moins deux fois plus grande que celle du canal courte portée 35 qui est elle aussi au moins deux fois plus grande que celle du canal longue portée 32. De plus, la durée des impulsions du canal longue portée 32 est au moins deux fois plus grande que celle des impulsions du canal longue portée 35 pour avoir les impulsions les plus énergétiques possibles tout en évitant les problèmes thermiques lors de l'émission des impulsions.

Dans un autre mode de réalisation, la fréquence centrale d'émission du canal courte portée est au moins trois fois plus grande que celle du canal longue portée afin d'améliorer la finesse de la détection.

Dans un mode de réalisation les paramètres d'émission des canaux 33 et 32 sont identiques (hormis la fréquence centrale). Dans un autre mode de réalisation les paramètres d'émission sont différents.

Dans un autre mode de réalisation, un cinquième canal peut être utilisé pour transmettre des communications acoustiques. Ce cinquième canal pourra exploiter par exemple le haut de la bande de l'antenne d'émission, et quelques kHz de bande, afin de pouvoir transmettre le plus d'informations possible. Dans ce cas également, la transmission n'a pas à respecter de cycle entre deux émissions, le signal n'étant pas traité en retour par l'émetteur.

Ainsi, les différents modes de fonctionnement associés aux quatre (ou cinq) canaux sont réalisés par un sonar actif unique 31. Ces modes de fonctionnement peuvent être modifiés ou adaptés de manière flexible et dynamique en ajustant le découpage de la bande passante continue ayant une grande largeur spectrale de l'antenne acoustique grâce au système électronique de génération de signaux de pilotage de ladite antenne. Le procédé d'utilisation de ce sonar actif du mode de réalisation de la figure 3 comprend:
- la sélection dynamique d'une pluralité de modalités de fonctionnement sonar distinctes, utilisant chacune une fraction différente de la bande passante d'émission de l'antenne acoustique, appelée canal (32, 33, 34, 35); et
- l'utilisation du système électronique pour générer simultanément une pluralité de signaux de pilotage de ladite antenne acoustique correspondant aux modalités de fonctionnement sélectionnées, ledit système électronique étant adapté de manière à ce que le sonar fonctionne selon des modes d'opération indépendants et simultanés.

Par sélection dynamique d'une pluralité de modes d'opération, on entend qu'il existe au moins une première configuration correspondant à une première pluralité de modes d'opération sonar et une deuxième configuration correspondant à une deuxième pluralité de modes d'opération sonar, la deuxième configuration correspondant à un découpage de la bande en canaux différents de celui de la 1ère configuration. De préférence, il n'y a pas un nombre prédéfini de configurations : le découpage de la bande spectrale est défini librement par l'utilisateur au moment de l'utilisation du sonar, sans qu'il soit nécessaire d'apporter des modifications matérielles au sonar (pour des raisons pratiques, il peut néanmoins y avoir une limite supérieure au nombre de canaux).

Les différents modes de fonctionnement sonar et les paramètres d'émission des différents canaux sont donnés à titre d'exemple et dans d'autres modes de réalisations les sous canaux possèdent des paramètres d'émission acoustiques différents associés à des modes de fonctionnement sonar différents. Par exemple, il peut exister plusieurs canaux de fréquences *f*_{*p*1} et *f*ₚ₂ qui ont pour buts de réaliser la poursuite simultanée de deux cibles distinctes. Dans un autre exemple, les fréquences centrales associées aux différents modes de fonctionnement sont adaptées selon la profondeur d'utilisation pour tenir compte du niveau de réverbération.

Dans un autre mode de réalisation, le nombre de canaux est différent de 4 et supérieur à 1, la fréquence centrale des canaux est différente pour éviter les problèmes d'interférence entre canaux et la largeur spectrale de chaque canal est supérieure à 1 ou 2 KHz. Le système d'antenne du mode de réalisation de la figure 4 est un système émetteur/récepteur. Il permet donc une acquisition des d'échos provenant des ondes sonores réfléchies par un ou plusieurs objets puis la détermination de divers paramètres du ou des objets à partir des échos. Les paramètres à déterminer sont choisis parmi la position, la vitesse, la direction du déplacement, la surface effective du ou des objets détectés.

Dans un autre mode de réalisation où plusieurs navires ou bâtiments fixes sont équipés de système sonars similaires à celui de la figure 4, il est possible pour chacun des sonars d'utiliser un canal de fréquence centrale différente et de largeur spectrale d'émission supérieure à 1 kHz de manière à pouvoir fonctionner sans dégradation de performance et sans interférence entre les différents sonars des différentes plateformes.

La figure 5A montre une vue en perspective d'un mode de réalisation d'une antenne acoustique large bande pouvant être utilisée pour la mise en œuvre de l'invention, et la figure 5B une vue schématique de cette même antenne. Il est cependant important de souligner que l'invention n'est pas limitée à un type d'antenne particulier et à ce mode de réalisation. D'autres modes de réalisation sont envisageables.

L'antenne ANT est centrée autour d'un premier axe longitudinal A1 et comprend un premier ensemble d'au moins deux transducteurs annulaires T1 (exactement deux dans le mode de réalisation illustré) et un second ensemble d'au moins deux transducteurs T2 (sept dans le mode de réalisation illustré). Les transducteurs annulaires T1 et T2 sont formés autour du même axe longitudinal A1. Les transducteurs T2 sont placés entre les transducteurs T1 sans qu'il y ait de recouvrement physique entre les transducteurs T1 et T2. Cela permet d'éviter les interactions acoustiques néfastes, comme le masquage des transducteurs T2 par les transducteurs T1. Chaque transducteur (T1, T2) présente au moins un mode radial ayant une fréquence de résonance, dite fréquence radiale et au moins un mode de cavité ayant une fréquence de résonance, dite fréquence de cavité. Les transducteurs T1 du premier ensemble sont configurés pour émettre des ondes sonores dans une première bande de fréquence s'étendant au moins entre les fréquences de cavité et les fréquences radiales des transducteurs T1, et les transducteurs T2 du second ensemble sont configurés pour émettre des ondes sonores dans une seconde bande de fréquence s'étendant au moins entre les fréquences de cavité et les fréquences radiales des transducteurs T2.

Les transducteurs T1 et T2 présentent des dimensionnements physiques différents, en particulier les transducteurs T2 présentent des dimensions physiques plus faibles que celles des transducteurs T1, de manière à ce que la fréquence de cavité d'un transducteur T2 du second ensemble soit sensiblement égale à la fréquence radiale d'un transducteur T1 du premier ensemble. L'expression « sensiblement égale » signifie que la fréquence de cavité d'un transducteur T2 est égale à la fréquence radiale des transducteurs T1 plus ou moins (fr1-fc1)/10, c'est-à-dire que fc2 = fr1 ± (fr1-fc1)/10, fr1 étant la fréquence radiale du transducteur du premier ensemble et fc1 étant la fréquence de cavité du transducteur du premier ensemble. Cela permet d'obtenir une bande de fréquence d'émission continue comprenant les fréquences des première et seconde bandes de fréquence.

Bien que cela ne soit pas strictement essentiel, les transducteurs T2 du second ensemble sont divisés en sous-groupes comprenant au moins deux transducteurs. Dans ce premier mode de réalisation, les transducteurs T2 sont divisés en trois sous-groupes (SG1, SG2, SG3). Le premier sous-groupe SG1 comprend deux transducteurs T2, le second sous-groupe SG2 comprend trois transducteurs T2 et le troisième sous-groupe SG3 comprend deux transducteurs T2. Le sous-groupe SG2 est placé entre les sous-groupes SG1 et SG3. L'espacement entre chaque sous-groupe, c'est-à-dire entre les sous-groupes SG1 et SG2 et les sous-groupes SG2 et SG3 pour ce premier mode de réalisation, est supérieur à l'espacement entre les transducteurs T2 d'un même sous-groupe. Cela permet de pouvoir réaliser plusieurs fonctions avec les transducteurs T2.

Chaque sous-groupe (SG1, SG2, SG3) présente au moins un mode de cavité ayant une fréquence de résonance, dite fréquence de cavité de groupe. En effet, lorsque deux transducteurs annulaires identiques sont agencés les uns au-dessus des autres à une distance faible par rapport à la longueur d'onde acoustique de leurs modes de cavités, ces modes interagissent et leur fréquence diminue (la fréquence du mode radial n'est pas affectée). Ainsi, comme les transducteurs T2 présentent des dimensions physiques équivalentes, ce sont les espacements entre les transducteurs T2 d'un même sous-groupe qui permettent de modifier la fréquence de cavité de groupe d'un sous-groupe.

Au moins un des sous-groupes présente une fréquence de cavité de groupe sensiblement égale à la fréquence radiale des transducteurs T1 du premier ensemble. Au moins un autre des sous-groupes présente une fréquence de cavité de groupe sensiblement égale à la fréquence de cavité des transducteurs T1 du premier ensemble. Dans le mode de réalisation des figures 5A et 5B, ce sont les transducteurs T2 du premier sous-groupe SG1 et du troisième sous-groupe SG3 qui présentent une fréquence de cavité de groupe sensiblement égale à la fréquence radiale des transducteurs T1 du premier ensemble ; et ce sont les transducteurs T2 du second sous-groupe SG2 qui présentent une fréquence de cavité de groupe sensiblement égale à la fréquence de cavité des transducteurs T1 du premier ensemble. Dans ce mode de réalisation, l'espacement entre les transducteurs T2 au sein du second sous-groupe SG2 est donc plus petit que l'espacement entre les transducteurs T2 au sein des sous-groupes SG1 et SG3. La fréquence radiale des transducteurs T2 n'est pas affectée par l'espacement des transducteurs T2 au sein d'un sous-groupe.

Le sous-groupe SG2 permet d'augmenter le niveau sonore des transducteurs T1, c'est-à-dire renforcer l'émission dans la première bande de fréquence, tandis que les transducteurs T2 des sous-groupes SG1 et SG3, en ayant la même fréquence de cavité sensiblement égale à la fréquence radiale des transducteurs T1, permettent de renforcer l'émission dans la seconde bande de fréquence.

Afin de renforcer le niveau sonore dans la bande de fréquence de cavité des transducteurs T1, c'est-à-dire au niveau de la borne inférieure de la première bande de fréquence, des éléments passifs P1 sont ajoutés à l'antenne ANT. Ces éléments passifs P1 sont empilés selon l'axe longitudinal A1, ils entourent les transducteurs T2 du second ensemble et sont placés entre les transducteurs T1 du premier ensemble. Ils présentent au moins un mode radial ayant une fréquence de résonance, dite fréquence radiale et au moins un mode de cavité ayant une fréquence de résonance, dite fréquence de cavité.

Afin de ne pas perturber le mode radial des transducteurs T2, les éléments passifs P1 sont réalisés dans un matériau tel que le rapport E/p de ce matériau est plus élevé que celui du matériau composant les transducteurs T2 du second ensemble, E étant le module d'Young des matériaux et p leur masse volumique. Cela permet également d'obtenir un élément passif P1 de diamètre supérieur à celui des transducteurs T2 tout en ayant un mode radial résonant à la même fréquence, c'est-à-dire que la fréquence radiale des éléments passifs P1 est sensiblement égale à la fréquence radiale des transducteurs T2.

De plus, pour éviter que l'émission des éléments passifs P1 ne masque l'émission des transducteurs T2, la fréquence radiale des éléments passifs P1 est sensiblement égale à une fréquence radiale des transducteurs T2 du second ensemble et la fréquence de cavité des éléments passifs P1 est comprise dans la première bande de fréquence.

L'excitation des éléments passifs P1 est issue du champ acoustique généré par les transducteurs T1 et les transducteurs T2 centraux, c'est-à-dire les transducteurs T2 du sous-groupe SG2 dans ce mode de réalisation.

Les différents transducteurs peuvent être excités par un seul et même signal électrique d'excitation, provenant d'un générateur de signaux non représenté. Des déphaseurs peuvent être placés entre le générateur et certains éléments afin de supprimer des interférences destructives susceptibles d'atténuer certaines composantes spectrales. Par exemple, un premier déphaseur peut déphaser les signaux d'excitation des transducteurs T2 des sous-groupes SG1 et SG3 par rapport aux transducteurs T1, et un second déphaseur peut déphaser les signaux d'excitation des transducteurs T2 du sous-groupe SG2 par rapport aux transducteurs T1. En variante, un seul déphaseur peut déphaser les signaux d'excitation de tous les transducteurs T2 par rapport aux transducteurs T1, en ignorant la subdivision en sous-groupes des transducteurs T2.

L'utilisation des transducteurs T1 et T2, et éventuellement des anneaux passifs P1, permet de couvrir environ deux octaves. Pour obtenir une bande spectrale continue s'étendant sur trois octaves ou plus, on utilise des transducteurs T3 dimensionnés de manière à émettre des ondes sonores dans une troisième bande de fréquence continue différente des première et seconde bandes de fréquence. Plus particulièrement, les transducteurs T3 présentent au moins un mode radial ayant une fréquence de résonance, dite fréquence radiale et au moins un mode de cavité ayant une fréquence de résonance, dite fréquence de cavité. La troisième bande de fréquence s'étend au moins entre les fréquences de cavité et les fréquences radiales des transducteurs T3 du troisième ensemble. De plus, la fréquence de cavité des transducteurs T3 du troisième ensemble est sensiblement égale à la fréquence radiale des transducteurs T2 du second ensemble. La réunion des première, secondaire et troisième bandes de fréquence permet donc d'obtenir une bande de fréquence continue couvrant trois octaves.

Les transducteurs T3 sont empilés selon un second axe longitudinal A2 parallèle à l'axe A1. Leurs faibles dimensions font qu'ils masquent très peu les transducteurs T1 et T2 ; par contre, ils sont masqués par ces derniers. Pour obtenir un émission réellement omnidirectionnelle sur toute la bande spectrale, il est nécessaire de prévoir plusieurs empilements de transducteurs T3 agencés autour l'empilement de transducteurs T1 et T2.

Dans la pratique l'antenne de réception pourra être constituée d'une antenne linéaire (cas de remorquage) ou surfacique (cas d'antenne de coque) de grande étendue pour avoir une bonne sensibilité et résolution des basses fréquences Pour couvrir l'ensemble des fréquences adressées par l'antenne d'émission les pas et la densité de capteurs pourra varier en fonction de la localisation vis-à-vis de l'antenne complète (sections d'antennes entrelacées par exemple)

Cette antenne sera équipée d'hydrophones, ponctuels ou surfaciques, couvrant la totalité de la bande émise. Une autre réalisation pourra être réalisée à base de capteurs pouvant déterminer la direction de provenance de l'onde sonore (capteurs vectoriels, géophones, combinaison d'accéléromètres.....)

## Revendications

1. Procédé d'utilisation d'un sonar actif (31) comprenant une antenne acoustique (37) présentant une bande passante continue ayant une largeur spectrale d'émission d'au moins deux octaves et un système électronique de génération de signaux de pilotage de ladite antenne acoustique (36), le procédé étant **caractérisé en ce qu'**il comprend:
- la sélection dynamique d'une pluralité de modalités de fonctionnement ou d'opération sonar distinctes choisies parmi l'escorte, la surveillance, la poursuite, la dissuasion ou la communication, utilisant chacune une fraction différente de la bande passante d'émission de l'antenne acoustique, appelée canal; et
- l'utilisation du système électronique pour générer une pluralité de signaux de pilotage de ladite antenne acoustique correspondant aux modalités de fonctionnement sélectionnées, ledit système électronique étant adapté pour permettre au sonar de fonctionner selon une pluralité de modalités d'opération indépendantes et simultanées.

2. Procédé selon la revendication 1 dans lequel chaque modalité de fonctionnement sonar est définie par un ensemble de paramètres d'émission acoustique comprenant au moins :
- une durée d'impulsion ;
- une cadence d'impulsions ;
- une fréquence centrale d'impulsion ;
- un type d'impulsion ; et
- un niveau sonore.

3. Procédé selon l'une quelconque des revendications précédentes comprenant en outre les étapes suivantes :
- acquisition par l'antenne acoustique des d'échos provenant des différents canaux réfléchis par un ou des objets (7)
- détermination des paramètres du ou des objets à partir des différents échos.

4. Procédé selon la revendication 3, dans lequel les paramètres à déterminer sont choisis parmi la vitesse, la position, la direction du déplacement et/ou la surface effective du ou des objets.

5. Procédé selon l'une quelconque des revendications précédentes, dans lequel la bande passante d'émission de l'antenne acoustique est fractionnée en au moins trois canaux (32, 33, 35) couvrant une bande passante supérieure à deux octaves de manière à réaliser une surveillance longue distance avec le canal de plus basse fréquence centrale (32), une surveillance courte distance avec le canal de plus haute fréquence centrale (35) et une poursuite avec le canal de fréquence centrale intermédiaire (33).

6. Procédé selon la revendication précédente, dans lequel la bande passante d'émission de l'antenne acoustique est fractionnée en un quatrième canal supplémentaire (34), d'une fréquence centrale comprise entre la fréquence centrale du canal adapté à la surveillance courte portée et celle du canal adapté à la surveillance longue portée, ledit canal possédant une cadence de répétition des impulsions plus de deux fois plus importante que celle du canal de surveillance courte portée de manière à fonctionner en mode dissuasion.

7. Procédé selon la revendication précédente, dans lequel la bande passante d'émission de l'antenne acoustique est fractionnée en un cinquième canal supplémentaire, ledit canal pouvant être utilisé librement y compris en mode continu, avec ou sans répétition, ce canal étant destiné à la communication acoustique.

8. Procédé selon l'une quelconque des revendications 5 à 7, dans lequel la cadence de répétition des impulsions acoustiques du canal adapté à la surveillance longue portée est au moins deux fois plus petite que celle du canal adapté à la surveillance courte portée.

9. Procédé selon l'une quelconque des revendications 5 à 8, dans lequel la durée des impulsions acoustiques du canal adapté à la surveillance longue portée est au moins deux fois plus grande que celle du canal adapté à la surveillance courte portée.

10. Procédé selon l'une quelconque des revendications 5 à 9, dans lequel la fréquence centrale des impulsions acoustiques du canal adapté à la surveillance longue portée est au moins deux fois plus petite que celle du canal adapté à la surveillance courte portée.

11. Procédé selon l'une quelconque des revendications 5 à 10, dans lequel la largeur spectrale de chaque canal est supérieure à 0.5 kHz et à 4 kHz pour les fréquences modulées.

12. Système sonar actif (31) pour la mise en œuvre d'un procédé d'utilisation d'un sonar actif, comprenant une antenne acoustique (37) et un système électronique de génération de signaux de pilotage de ladite antenne acoustique (36) présentant une bande passante continue ayant une largeur spectrale d'émission d'au moins deux octaves et le système sonar actif étant caractérisé Z en ce que le système électronique de génération de signaux de pilotage de ladite antenne acoustique est configuré de manière à générer une pluralité de signaux de pilotage de ladite antenne acoustique correspondant à des modalités de fonctionnement sonar distinctes choisies parmi l'escorte, la surveillance, la poursuite, la dissuasion ou la communication, choisies dynamiquement utilisant chacune une fraction différente de la bande passante d'émission de l'antenne acoustique, appelée canal, ledit système électronique étant adapté pour permettre au sonar de fonctionner selon une pluralité de modalités d'opération indépendantes et simultanées.

13. Système selon la revendication 12 dans lequel ladite antenne acoustique est centrée d'autour d'un premier axe longitudinal (A1) et comprend au moins un premier et un second ensemble d'au moins deux transducteurs empilés selon ledit axe longitudinal, chaque transducteur présentant au moins un mode radial ayant une fréquence de résonance, dite fréquence radiale, ainsi qu'un mode de cavité ayant une fréquence de résonance, dite fréquence de cavité, **caractérisée en ce que** les deux transducteurs (T1) du premier ensemble sont configurés pour émettre des ondes sonores dans une première bande de fréquence continue s'étendant au moins entre les fréquences de cavité et les fréquences radiales des transducteurs (T1) du premier ensemble et les deux transducteurs (T2) du second ensemble sont configurés pour émettre des ondes sonores dans une seconde bande de fréquence continue s'étendant au moins entre les fréquences de cavité et les fréquences radiales des transducteurs du second ensemble, **en ce que** la fréquence radiale d'un transducteur du premier ensemble est sensiblement égale à la fréquence de cavité d'un transducteur du second ensemble et **en ce que** les transducteurs du second ensemble sont placés entre les transducteurs du premier ensemble.

## Patentansprüche

1. Verfahren zur Verwendung eines aktiven Sonars (31), umfassend eine akustische Antenne (37), welche ein kontinuierliches Passband mit einem spektralen Emissionsbereich von mindestens zwei Oktaven aufweist, und ein elektronisches System zur Erzeugung von Steuerungssignalen der akustischen Antenne (36), wobei das Verfahren **dadurch gekennzeichnet ist, dass** es Folgendes umfasst:
- die dynamische Auswahl einer Vielzahl von unterschiedlichen Sonar-Funktions- oder -Betriebsmodalitäten, ausgewählt aus Eskorte, Überwachung, Verfolgung, Abschreckung oder Kommunikation, welche jeweils eine unterschiedliche Fraktion des Emissions-Passbandes der akustischen Antenne verwenden, genannt Kanal; und
- die Verwendung des elektronischen Systems zur Erzeugung einer Vielzahl von Steuerungssignalen der akustischen Antenne, welche den ausgewählten Funktionsmodalitäten entspricht, wobei das elektronische System angepasst ist, um den Sonar in die Lage zu versetzen, gemäß einer Vielzahl von unabhängigen und gleichzeitigen Betriebsmodalitäten zu arbeiten.

2. Verfahren nach Anspruch 1, wobei jede Sonar-Betriebsmodalität durch eine Gruppe von akustischen Emissionsparametem definiert ist, mindestens Folgendes umfassend:
- eine Impulsdauer;
- einen Impulstakt;
- eine Impuls-Mittelfrequenz;
- eine Impulsart; und
- einen Lautstärkepegel.

3. Verfahren nach einem der vorhergehenden Ansprüche, welches zudem folgende Schritte umfasst:
- Erfassen, durch die akustische Antenne, der aus den unterschiedlichen Kanälen stammenden Echos, welche durch ein oder mehrere Objekte (7) reflektiert werden;
- Bestimmen der Parameter des oder der Objekte anhand der unterschiedlichen Echos.

4. Verfahren nach Anspruch 3, wobei die zu bestimmenden Parameter ausgewählt sind aus der Geschwindigkeit, der Position, der Bewegungsrichtung und/oder der effektiven Oberfläche des oder der Objekte.

5. Verfahren nach einem der vorhergehenden Ansprüche, wobei das Emissions-Passband der akustischen Antenne in mindestens drei Kanäle (32, 33, 35) fraktioniert ist, welche ein Passband abdecken, welches größer als zwei Oktaven ist, um eine Langstreckenüberwachung mit dem Kanal mit der niedrigsten Mittelfrequenz (32), eine Kurzstreckenüberwachung mit dem Kanal mit der höchsten Mittelfrequenz (35) und eine Verfolgung mit dem Kanal mit der mittleren Mittelfrequenz (33) zu bewerkstelligen.

6. Verfahren nach dem vorhergehenden Anspruch, wobei das Emissions-Passband der akustischen Antenne in einen vierten zusätzlichen Kanal (34) fraktioniert ist, mit einer Mittelfrequenz, welche zwischen der Mittelfrequenz des Kanals, welcher für die Überwachung mit kurzer Reichweite angepasst ist und der Mittelfrequenz des Kanals, welcher für die Überwachung mit langer Reichweite angepasst ist, liegt, wobei der Kanal einen Impuls-Wiederholungstakt aufweist, welcher zwei Mal größer als derjenige des Überwachungskanals mit kurzer Reichweite ist, sodass er im Abschreckungsmodus arbeitet.

7. Verfahren nach dem vorhergehenden Anspruch, wobei das Emissions-Passband der akustischen Antenne in einen fünften zusätzlichen Kanal fraktioniert ist, wobei der Kanal frei verwendet werden kann, darunter im kontinuierlichen Modus, mit oder ohne Wiederholung, wobei dieser Kanal zur akustischen Kommunikation bestimmt ist.

8. Verfahren nach einem der Ansprüche 5 bis 7, wobei der Wiederholungstakt der akustischen Impulse des Kanals, welcher zur Überwachung mit langer Reichweite angepasst ist, mindestens zweimal kleiner als derjenige des Kanals ist, welcher zur Überwachung mit kurzer Reichweite angepasst ist.

9. Verfahren nach einem der Ansprüche 5 bis 8, wobei die Dauer der akustischen Impulse des Kanals, welcher zur Überwachung mit langer Reichweite angepasst ist, mindestens zweimal größer als diejenige des Kanals ist, welcher zur Überwachung mit kurzer Reichweite angepasst ist.

10. Verfahren nach einem der Ansprüche 5 bis 9, wobei die Mittelfrequenz der akustischen Impulse des Kanals, welcher zur Überwachung mit langer Reichweite angepasst ist, mindestens zweimal kleiner als diejenige des Kanals ist, welcher zur Überwachung mit kurzer Reichweite angepasst ist.

11. Verfahren nach einem der Ansprüche 5 bis 10, wobei die spektrale Breite eines jeden Kanals größer als 0,5 kHz ist, und größer als 4 kHz bei den modulierten Frequenzen.

12. Aktives Sonarsystem (31) zur Umsetzung eines Verfahrens zur Verwendung eines aktiven Sonars, umfassend eine akustische Antenne (37) und ein elektronisches System zur Erzeugung von Steuerungssignalen der akustischen Antenne (36), welche ein kontinuierliches Passband mit einem spektralen Emissionsbereich von mindestens zwei Oktaven aufweist, und wobei das aktive Sonarsystem dadurch charakterisiert ist, dass das elektronische System zur Erzeugung von Steuerungssignalen der akustischen Antenne dazu konfiguriert ist, eine Vielzahl von Steuerungssignalen der akustischen Antenne zu erzeugen, welche unterschiedlichen Sonar-Funktionsmodalitäten entspricht, ausgewählt aus Eskorte, Überwachung, Verfolgung, Abschreckung oder Kommunikation, welche dynamisch ausgewählt werden und jeweils eine unterschiedliche Fraktion des Emission-Passbandes der akustischen Antenne verwenden, genannt Kanal, wobei das elektronische System angepasst ist, um den Sonar in die Lage zu versetzen, gemäß einer Vielzahl von unabhängigen und gleichzeitigen Betriebsmodalitäten zu arbeiten.

13. System nach Anspruch 12, wobei die akustische Antenne rund um eine erste Längsachse (A1) zentriert ist und mindestens eine erste und eine zweite Gruppe von mindestens zwei gemäß der Längsachse gestapelten Umwandlern umfasst, wobei jeder Umwandler mindestens einen Radialmodus aufweist, welcher eine Resonanzfrequenz besitzt, genannt Radialfrequenz, sowie einen Hohlraummodus, welcher eine Resonanzfrequenz aufweist, genannt Hohlraumfrequenz, **dadurch gekennzeichnet, dass** die beiden Umwandler (T1) der ersten Gruppe konfiguriert sind, um akustische Wellen in einem ersten kontinuierlichen Frequenzband auszusenden, welches sich mindestens zwischen den Hohlraumfrequenzen und den Radialfrequenzen der Umwandler (T1) der ersten Gruppe erstreckt, und wobei die beiden Umwandler (T2) der zweiten Gruppe konfiguriert sind, um akustische Wellen in einem zweiten kontinuierlichen Frequenzband auszusenden, welches sich mindestens zwischen den Hohlraumfrequenzen und den Radialfrequenzen der Umwandler der zweiten Gruppe erstreckt, dadurch, dass die Radialfrequenz eines Umwandlers der ersten Gruppe im Wesentlichen gleich der Hohlraumfrequenz eines Umwandlers der zweiten Gruppe ist, und dadurch, dass die Umwandler der zweiten Gruppe zwischen den Umwandlern der ersten Gruppe platziert sind.

## Claims

1. A method for using an active sonar (31) comprising an acoustic antenna (37) having a continuous bandwidth having a spectral emission width of at least two octaves and an electronic system for generating signals for controlling said acoustic antenna (36), the method being **characterised in that** it comprises:
- dynamically selecting a plurality of separate sonar functioning or operating modalities selected from among escorting, surveillance, tracking, deterring and communicating, each using a different fraction of the emission bandwidth of the acoustic antenna, called channel; and
- using the electronic system to generate a plurality of signals for controlling said acoustic antenna corresponding to the selected functioning modalities, said electronic system being adapted to allow the sonar to function according to a plurality of independent and simultaneous operating modalities.

2. The method as claimed in claim 1, wherein each sonar functioning modality is defined by a set of acoustic emission parameters comprising at least:
- a pulse duration;
- a pulse rate;
- a central pulse frequency;
- a pulse type; and
- a sound level.

3. The method as claimed in any one of the preceding claims, further comprising the following steps:
- the acoustic antenna acquiring echoes originating from the various channels reflected by one or more objects (7);
- determining the parameters of the one or more objects on the basis of the various echoes.

4. The method as claimed in claim 3, wherein the parameters to be determined are selected from among the speed, the position, the direction of movement and/or the effective surface area of the one or more objects.

5. The method as claimed in any one of the preceding claims, wherein the emission bandwidth of the acoustic antenna is divided into at least three channels (32, 33, 35) covering a bandwidth of more than two octaves so as to carry out long-distance surveillance using the channel with the lowest central frequency (32), short-distance surveillance using the channel with the highest central frequency (35) and tracking using the channel with the intermediate central frequency (33).

6. The method as claimed in the preceding claim, wherein the emission bandwidth of the acoustic antenna is divided into a fourth additional channel (34) with a central frequency ranging between the central frequency of the channel adapted for short-range surveillance and that of the channel adapted for long-range surveillance, said channel having a pulse repetition rate that is more than twice as big as that of the channel for short-range surveillance so as to function in deterrence mode.

7. The method as claimed in the preceding claim, wherein the emission bandwidth of the acoustic antenna is divided into a fifth additional channel, said channel being able to be used freely, including in continuous mode, with or without repetition, said channel being intended for acoustic communication.

8. The method as claimed in any one of claims 5 to 7, wherein the repetition rate of the acoustic pulses of the channel adapted for long-range surveillance is at least twice as small as that of the channel adapted for short-range surveillance.

9. The method as claimed in any one of claims 5 to 8, wherein the duration of the acoustic pulses of the channel adapted for long-range surveillance is at least twice as big as that of the channel adapted for short-range surveillance.

10. The method as claimed in any one of claims 5 to 9, wherein the central frequency of the acoustic pulses of the channel adapted for long-range surveillance is at least twice as small as that of the channel adapted for short-range surveillance.

11. The method as claimed in any one of claims 5 to 10, wherein the spectral width of each channel is greater than 0.5 kHz and greater than 4 kHz for the modulated frequencies.

12. An active sonar system (31) for implementing a method for using an active sonar, comprising an acoustic antenna (37) and an electronic system for generating signals for controlling said acoustic antenna (36) having a continuous bandwidth having a spectral emission width of at least two octaves and the active sonar system being **characterised in that** the electronic system for generating signals for controlling said acoustic antenna is configured so as to generate a plurality of signals for controlling said acoustic antenna corresponding to separate sonar functioning modalities selected from among escorting, surveillance, tracking, deterring or communicating, dynamically selected each using a different fraction of the emission bandwidth of the acoustic antenna, called channel, said electronic system being adapted to allow the sonar to function according to a plurality of independent and simultaneous operating modalities.

13. The system as claimed in claim 12, wherein said acoustic antenna is centred around a first longitudinal axis (A1) and comprises at least one first and one second set of at least two transducers stacked along said longitudinal axis, each transducer having at least one radial mode having a resonant frequency, called radial frequency, as well as a cavity mode having a resonant frequency, called cavity frequency, **characterised in that** the two transducers (T1) of the first set are configured to emit sound waves in a first continuous frequency band extending at least between the cavity frequencies and the radial frequencies of the transducers (T1) of the first set and the two transducers (T2) of the second set are configured to emit sound waves in a second continuous frequency band extending at least between the cavity frequencies and the radial frequencies of the transducers of the second set, **in that** the radial frequency of a transducer of the first set is substantially equal to the cavity frequency of a transducer of the second set and **in that** the transducers of the second set are placed between the transducers of the first set.
